# EUROPÄISCHE PATENTANMELDUNG

(11) **EP 4 325 126 A1**
(43) Veröffentlichungstag der Anmeldung: **21.02.2024**
(21) Anmeldenummer: 23185717.8
(22) Anmeldetag: 17.07.2023
(51) Int. Cl.: F24C 15/32, B64D 11/04, F24C 15/20

(54) **DAMPFGARER-ANORDNUNG**

(30) Priorität: 15.08.2022 DE 102022208454
(71) Anmelder: Siemens Mobility GmbH, 81739 München (DE)
(72) Erfinder: Henkel, Sven, 47829 Krefeld (DE); Kasap, Irfan, 44653 Herne (DE)
(74) Vertreter: Siemens Patent Attorneys

(57) **Zusammenfassung**

Die Erfindung betrifft eine Dampfgarer-Anordnung (1) zum Einsatz in einer Küche oder Bordküche eines Fahrzeugs, wobei sie einen, einem Dampfgarer räumlich zugeordneten Ansaugraum (3) aufweist,
- der Ansaugraum (3) zur Erzeugung eines Unterdrucks in dem Ansaugraum (3) über einen Evakuierungskanal (9) mit einem Kompressor (8) verbunden ist,
- auf einer Einlassseite (4) und auf einer Auslassseite (5) des Ansaugraumes (3) jeweils ein schaltbares Ventil (6, 7) angeordnet ist, wobei die schaltbaren Ventile (6, 7) von einer Steuereinrichtung (11) derart gesteuert sind, dass sie zur Durchführung eines zeitlich begrenzten Ansaugvorgangs bei Öffnen der Tür (2) des Dampfgarers geöffnet werden, so dass aus einem Dampfgarer-Hauptkörper austretender Dampf stoßweise in den Ansaugraum (3) gesaugt wird, und
die Auslassseite (5) des Ansaugraumes (3) über einen Fortluftkanal (19) mit einem Fortlüfter (20) zum Abführen von in dem Ansaugraum (3) befindlichen Dampf an eine Umgebung verbunden ist.

## Beschreibung

Die Erfindung bezieht sich auf eine Dampfgarer-Anordnung zum Einsatz in einer Küche oder Bordküche eines Fahrzeugs sowie auf ein mit einer solchen Anordnung ausgestattetes Fahrzeug.

Beim Einsatz eines Dampfgarers ("Steamer") beispielsweise in Großküchen oder Bordküchen von Flugzeugen oder Schienenfahrzeugen ist zu beobachten, dass der in dem Dampfgarer befindliche Dampf austritt, sobald die Tür des Dampfgarers geöffnet wird. Dieser Dampf ist vergleichsweise heiß, vermischt sich im Raumvolumen mit der Raumluft und kühlt nur langsam ab, so dass die Arbeitsbedingungen für im Bereich des Dampfgarers tätige Personen erheblich erschwert werden. Zudem wird auch der gesamte Raum, in dem sich der Dampfgarer befindet, durch ständiges Öffnen und Schließen der Tür erwärmt, was eine Klimatisierung des betreffenden Raumes negativ beeinflusst.

Der aus dem Dampfgarer austretende Dampf wird bisher, insbesondere bei Schienenfahrzeugen, aus der Bordküche dadurch abgeführt, dass die Bordküche mit einer Klima-Anordnung ausgestattet ist, zu der neben einer typischer Weise auf einem Fahrzeugdach angeordneter Klimaanlage und deren Steuerung auch ein für den Wagen, in dem die Bordküche untergebracht ist, vorgesehener Fortluftkanal mit zugehörigem Fortlüfter gehört. Dieser Fortlüfter führt das Luft-/Dampf-Gemisch aus der Bordküche an eine Umgebung des Schienenfahrzeugs ab. Diese Vorgehensweise hat sich jedoch als wenig effektiv erwiesen.

Das Dokument DE 20 2011 110 073 U1 zeigt ein Gasgerät zum Garen von Speisen, insbesondere für ein mobile Feldküche.

Das Dokument DE 10 2017 200 640 A1 betrifft einen Wagenkasten mit einer Bordküche, die eine gattungsgemäße Dampfgarer-Anordnung umfasst.

Ausgehend hiervon liegt der Erfindung die Aufgabe zugrunde, eine Dampfgarer-Anordnung der eingangs genannten Art sowie deren Integration in ein Fahrzeug derart weiterzuentwickeln, dass aus der Tür des Dampfgarers austretender Dampf effizienter abgeführt werden kann.

Diese Aufgabe wird gelöst durch eine Dampfgarer-Anordnung nach Anspruch 1.

Danach zeichnet sich die Dampfgarer-Anordnung der eingangs genannten Art dadurch aus, dass sie einen, einem Dampfgarer räumlich zugeordneten, behälterartigen Ansaugraum aufweist, der Ansaugraum zur Erzeugung eines Unterdrucks in dem Ansaugraum über einen Evakuierungskanal mit einem Kompressor verbunden ist, auf einer Einlassseite und auf einer Auslassseite des Ansaugraumes jeweils ein schaltbares Ventil angeordnet ist, wobei die schaltbaren Ventile von einer Steuereinrichtung derart gesteuert sind, dass sie zur Durchführung eines zeitlich begrenzten Ansaugvorgangs bei Öffnen der Tür des Dampfgarers geöffnet werden, so dass aus dem Dampfgarer-Hauptkörper austretender Dampf stoßweise in den Ansaugraum gesaugt wird, und die Auslassseite des Ansaugraumes über einen Fortluftkanal mit einem Fortlüfter zum Abführen von in dem Ansaugraum befindlichen Dampf an eine Umgebung verbunden ist

Wesentlicher Aspekt der Erfindung ist es, die Dampfgarer-Anordnung derart auszuführen, dass ein stoßartiger Absaugvorgang für denjenigen Dampf realisierbar ist, der gerade bei Öffnen der Tür des Dampfgarers in einen Raumbereich unmittelbar vor dem Dampfgarer gelangt. Unter einem stoßartigen Absaugvorgang wird insbesondere ein solcher verstanden, der weniger als 15, bevorzugt weniger als 10 Sekunden andauert.

Da mit Hilfe des Kompressors in dem Ansaugraum ein Unterdruck vorgehalten wird, ist es möglich, bei Öffnen der Tür einen stoßweisen Absaugvorgang von austretendem Dampf vorzunehmen. Dies hat den Vorteil, dass sehr effektiv abgesaugt wird, während nicht abgesaugte Anteile des Dampfes, die in den umliegenden Raum gelangen, sehr gering gehalten werden. Insofern wird eine Beeinträchtigung von Personen, die in der Nähe des Dampfgarers arbeiten, wirksam herabgesetzt.

Der zum Fördern des angesaugten Dampfes aus dem Ansaugraum in die Umgebung eingesetzte Fortlüfter muss nicht unmittelbar der Dampfgarer-Anordnung zugeordnet sein. Vielmehr kann er auch Komponente einer vorhandenen Fortluft-Kanalanordnung eines Raumes oder Fahrzeugbereiches (Küche, Bordküche) sein, in dem der Dampfgarer angeordnet ist.

Der Ansaugraum ist bevorzugt auf eine Oberseite des typischer Weise quaderförmigen Dampfgarer-Hauptkörpers gesetzt und weist auf seiner Einlassseite eine Ansaugöffnung auf, die einer Oberkante der Tür des Dampfgarers benachbart angeordnet ist. In dieser Weise wird ein wirksames Absaugen von gerade aus dem Dampfgarer austretendem Dampf unterstützt.

In dem Fortluftkanal ist bevorzugt zwischen einer Auslassöffnung auf der Auslassseite des Ansaugraums und dem Fortlüfter ein Rückschlagventil angeordnet. Dies hat den Vorteil, dass im Betrieb des Kompressors zur Erzeugung eines Unterdrucks in dem Ansaugraum aus dem Fortluftkanal keine Fortluft in den Ansaugraum einströmen kann.

Des Weiteren ist es bevorzugt, dass in den Evakuierungskanal zwischen dem Ansaugraum und dem Kompressor ein Rückschlagventil angeordnet ist. Dies verhindert, dass bei ausgeschaltetem Kompressor und vorliegendem Unterdruck in der Ansaugkammer Luft in den Ansaugraum gelangen kann.

Die Steuereinrichtung ist derart ausgebildet, dass der Ansaugvorgang dadurch beendet wird, dass die schaltbaren Ventile geschlossen werden. Das Schließen der Ventile kann dann als auslösendes Ereignis für ein Einschalten des Kompressors genutzt werden, so dass in dem Ansaugraum wieder ein Unterdruck erzeugt wird.

In einer ersten Ausführungsform ist die Steuereinrichtung derart ausgebildet, dass der Ansaugvorgang dadurch beendet wird, dass ein vorbestimmtes Zeitintervall für einen durchgehenden Öffnungszustand der schaltbaren Ventile abgelaufen ist. Dieses Zeitintervall kann empirisch ermittelt werden.

In einer zweiten Alternative kann der Ansaugvorgang dadurch beendet werden, dass an einem in dem Ansaugraum befindlichen Druckmessgerät ein Druckwert erreicht wird, der einem vorbestimmten Druckwert entspricht. Dieser vorbestimmte Druckwert gibt den Zustand wieder, dass der aus der Tür des Dampfgarers austretende Dampf weitestgehend in den Ansaugraum gelangt ist.

Bevorzugt sind die Ventile als schaltbare Magnetventile ausgebildet.

Vorteilhafterweise kann die Steuereinrichtung zusätzlich den Kompressor steuern, wobei sie den Kompressor bevorzugt nach Beendigung des Ansaugvorgangs einschaltet.

Ein Ausschalten des Kompressors erfolgt bevorzugt dann, wenn in dem Ansaugraum ein gewünschter Unterdruck erreicht ist. Dies kann beispielsweise durch Vorgabe eines Zeitintervalls für den durchgehenden Betrieb des Kompressors oder, bei Vorhandensein eines Druckmessgerätes im Ansaugraum, bei Erreichen eines vorgegebenen Druckwertes, der einen ausreichenden Unterdruck für einen Ansaugvorgang wiedergibt, der Fall sein.

Ein Ausführungsbeispiel der Erfindung wird nachfolgend unter Bezugnahme auf die Zeichnung noch näher erläutert. Es zeigen:

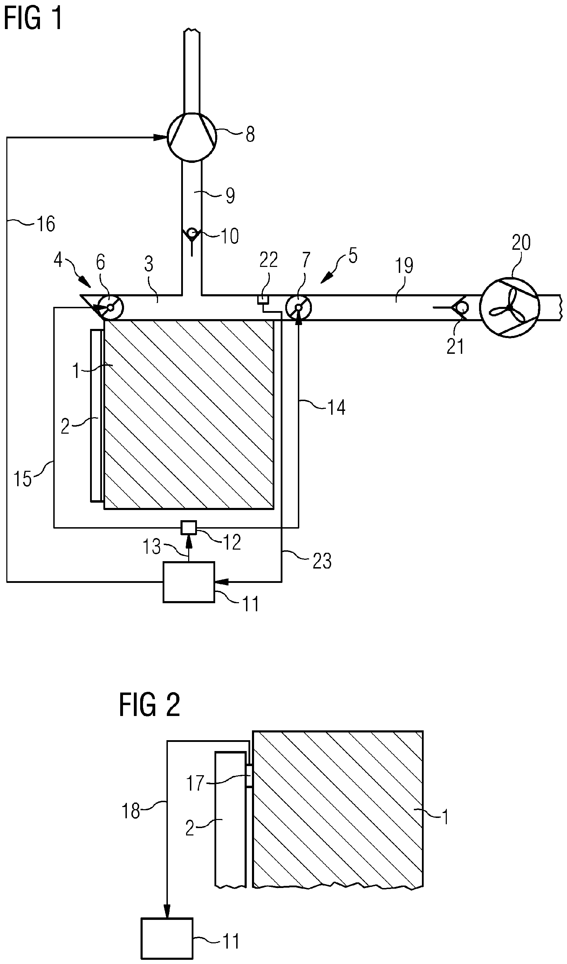

Fig. 1 eine schematische Darstellung einer Dampfgarer-Anordnung in einer Bordküche eines Schienenfahrzeugs und
Fig. 2 eine schematische Darstellung von für ein Erfassen eines Öffnungsvorgangs der Tür des Dampfgarers maßgeblichen Komponenten der Dampfgarer-Anordnung von Fig. 1.

Wie in der Figur veranschaulicht ist, umfasst eine Dampfgarerer-Anordnung einen Dampfgarer mit einem Dampfgarer-Hauptkörper 1 zur Zubereitung von Speisen und einer Tür 2, wobei der Dampfgarer im hier vorgestellten Ausführungsbeispiel in einer Bordküche eines Schienenfahrzeugs angeordnet ist. Die Tür 2 ist typischer Weise im unteren Bereich des Dampfgarer-Hauptkörpers 1 angelenkt. Beim Öffnen der Tür 2 wird die obere Kante der Tür 2 von dem Hauptkörper 1 des Dampfgarers fortgeschwenkt und es tritt aus dem Inneren des Dampfgarer-Hauptkörpers 1 kommender Dampf aus.

Auf eine Oberseite des Dampfgarer-Hauptkörpers 1 ist ein Ansaugraum 3 gesetzt und dort montiert. Dieser behälterartige Ansaugraum 3 ist senkrecht zur Zeichenebene der Figur beidseitig luftdicht abgeschlossen. Eine Einlassseite 4 des Ansaugraumes 3 ist einer Oberkante der Tür 2 benachbart angeordnet. Dem gegenüber befindet sich eine Auslassseite 5 des Ansaugraums 3 an dessen von der Einlassseite entfernten Ende. Die Einlassseite 4 des Ansaugraums 3 ist einwärts einer Einlassöffnung des Ansaugraumes 3 mit einem schaltbaren Magnetventil 6 mit Federrückstellung ausgestattet, welches die Einlassseite 4 des Ansaugraums verschließen und öffnen kann. Auf der Auslassseite 5 des Ansaugraums 3 ist ebenfalls ein schaltbares Magnetventil 7 mit Federrückstellung vorgesehen, so dass auch die Außenseite 5 geöffnet oder geschlossen werden kann.

Zudem umfasst die vorgestellte Dampfgarer-Anordnung einen Kompressor 8, der über einen Evakuierungskanal 9 an den Ansaugraum 3 angeschlossen ist, um im Ansaugraum 3 einen Unterdruck von beispielsweise 0,7 bar zu erzeugen. In dem Evakuierungskanal 9 ist zudem ein Rückschlagventil 10 vorgesehen, welches verhindert, dass bei abgeschaltetem Kompressor 8 Luft über den Evakuierungskanal 9 in den Ansaugraum 3 gelangen kann.

Des Weiteren umfasst die Dampfgarer-Anordnung eine zentrale Steuereinheit 11, welche über einen Schalter 12 die beiden Magnetventile 6, 7 steuert. Dies geschieht über eine Steuerleitung 13 zwischen der zentralen Steuereinheit 11 und dem Schalter 12 sowie über Steuerleitungen 14, 15 von dem Schalter 12 zum jeweiligen Magnetventil 6, 7.

Des Weiteren steuert die zentrale Steuereinheit 11 über eine Steuerleitung 16 den Kompressor 8.

Des Weiteren ist ein Berührungssensor 17 vorgesehen, der zwischen einem oberen Rand der Tür 2 und dem Dampfgarer-Hauptkörper 3 angeordnet ist und der zentralen Steuereinheit 11 ein Öffnen der Tür 2 signalisiert, und zwar über eine Steuerleitung 18.

Die zentrale Steuerleitung 11 ist derart ausgebildet, dass sie bei Signalisierung eines Öffnungsvorgangs für die Tür 2 die beiden Magnetventile 6, 7 öffnet. Dabei herrscht in dem Ansaugraum 3 ein vorbestimmter Unterdruck, der zuvor mit Hilfe des Kompressors 8 erzeugt worden ist. Das Öffnen der Magnetventile 6, 7 hat zur Folge, dass ein stoßförmiger Ansaugvorgang erfolgt, in dessen Verlauf aus dem Dampfgarer-Hauptkörper 1 austretender Dampf schlagartig in den Ansaugraum 3 transportiert wird. Eine Dauer des Ansaugvorgangs hängt u. a. von einem verfügbaren Volumen des Ansaugraumes ab und wird typischerweise kleiner als 15 Sekunden sein, bevorzugt 5 bis 10 Sekunden. Bei großen Mengen von abzuführendem Dampf ist es auch möglich, mehrere, zeitlich unmittelbar aufeinander folgende schlagartige Ansaugvorgänge vorzusehen, wobei der Ansaugraum zwischenzeitlich immer wieder neu evakuiert wird, um den gewünschten Unterdruck zu erzeugen. Der Ansaugraum 3 wird gleichzeitig mit dem Ansaugvorgang über einen Fortluftkanal 19 evakuiert, und zwar mit Hilfe eines Fortlüfters 20, der über ein Rückschlagventil 21 mit dem Ansaugraum 3 strömungstechnisch verbunden ist. Das Rückschlagventil 21 bewirkt, dass kein Fluid aus dem Fortluftkanal 19 in Richtung Ansaugraum 3 gefördert werden kann.

Die zentrale Steuereinheit 11 schließt die Magnetventile 6, 7 beispielsweise nach Ablauf eines vorbestimmten Zeitintervalls oder, wenn, wie bei dem in den Figuren dargestellten Ausführungsbeispiel vorgesehen, der Ansaugraum 3 mit einem Drucksensor 22 ausgestattet ist, nach Erreichen eines vorbestimmten Drucks in dem Ansaugraum 3. Der Drucksensor 22 ist über eine Signalleitung 23 mit der zentralen Steuereinheit 11 verbunden. Es ist auch denkbar, dass das Schließen der Magnetventile 6, 7 auf einer Kombination von Zeitintervall/Druckerreichung basiert, wobei ein Schließen der Magnetventile 6, 7 dann erfolgt, wenn eines der beiden Kriterien eintrifft.

Die Steuerung des Kompressors 8 durch die zentrale Steuereinheit erfolgt in folgender Weise: sofern der Kompressor 8 eine vorgegebene Zeit lang in Betrieb gewesen ist oder ein vorbestimmter Druckwert in dem Ansaugraum 3 erreicht ist, schaltet die zentrale Steuereinheit 11 den Kompressor 8 aus. Bis zum Öffnen der Magnetventile 6, 7 bleibt damit ein Unterdruck in dem Ansaugraum 3 erhalten, der beim Öffnen der Tür 2 und damit einhergehendem Öffnen der Magnetventile 6, 7 zum Absaugen des Dampfes aus dem Dampfgarer-Hauptkörper 1 zur Verfügung steht. Erst wenn die Magnetventile 6, 7 wieder geschlossen werden, und zwar durch entsprechende Steuerung durch die zentrale Steuereinheit 11, schaltet die zentrale Steuereinheit 11 den Kompressor 8 wieder ein, so dass erneut ein Unterdruck in den Ansaugraum 3 erzeugt wird.

Es ist hervorzuheben, dass die Größe bzw. das Volumen des Fortluftkanals 19 über ein vorhandenes Volumen des Dampfgarer-Hauptkörpers 1 bzw. des technisch möglichen Unterdrucks in dem Ansaugraum 3 ausgelegt wird. Wesentlicher Gesichtspunkt ist es, dass die hier vorgestellte Erfindung eine schlagartige Absaugung des aus dem Dampfgarer-Hauptkörper 1 austretenden Dampfes gestattet, und zwar unter Ausnutzung des Unterdrucks im Ansaugraum 3, in dem bei geöffneten Magnetventilen 6, 7 der Dampf gefördert wird. Von dem Ansaugraum 3 aus gelangt nun der abgesaugte Dampf über den Fortluftkanal 19 in die bei dem Schienenfahrzeug vorgegebene Fortluft-Kanalanordnung, an die der Fortluftkanal 18 angeschlossen ist, und letztlich in die Umgebung des Schienenfahrzeugs. Dabei kann insbesondere der Fortlüfter 20 Teil der vorhandenen Fortluft-Kanalanordnung sein. Anders ausgedrückt, ist der Fortlüfter 20 nicht unmittelbar der Dampfgarer-Anordnung zugeordnet, sondern Komponente der vorhandenen Fortluft-Kanalanordnung des Schienenfahrzeugs.

## Patentansprüche

1. Dampfgarer-Anordnung zum Einsatz in einer Küche oder Bordküche eines Fahrzeugs,
wobei
- sie einen, einem Dampfgarer räumlich zugeordneten, behälterartigen Ansaugraum (3) aufweist,
**dadurch gekennzeichnet, dass**
- der Ansaugraum (3) zur Erzeugung eines Unterdrucks in dem Ansaugraum (3) über einen Evakuierungskanal (9) mit einem Kompressor (8) verbunden ist,
- auf einer Einlassseite (4) und auf einer Auslassseite (5) des Ansaugraumes (3) jeweils ein schaltbares Ventil (6, 7) angeordnet ist, wobei die schaltbaren Ventile (6, 7) von einer Steuereinrichtung (11) derart gesteuert sind, dass sie zur Durchführung eines zeitlich begrenzten Ansaugvorgangs bei Öffnen einer Tür (2) des Dampfgarers geöffnet werden, so dass aus dem Dampfgarer-Hauptkörper austretender Dampf stoßweise in den Ansaugraum (3) gesaugt wird, und
- die Auslassseite (5) des Ansaugraumes (3) über einen Fortluftkanal (19) mit einem Fortlüfter (20) zum Abführen von in dem Ansaugraum (3) befindlichen Dampf an eine Umgebung verbunden ist.

2. Dampfgarer-Anordnung nach Anspruch 1,
**dadurch gekennzeichnet, dass**
der Ansaugraum (3) auf eine Oberseite des Dampfgarer-Hauptkörpers (1) gesetzt ist und auf seiner Einlassseite (4) eine Ansaugöffnung aufweist, die einer Oberkante der Tür (2) des Dampfgarers benachbart angeordnet ist.

3. Dampfgarer-Anordnung nach einem der Ansprüche 1 oder 2,
**dadurch gekennzeichnet, dass**
in dem Fortluftkanal (19) zwischen einer Auslassöffnung auf der Auslassseite (5) des Ansaugraumes (3) und dem Fortlüfter (19) ein Rückschlagventil (21) angeordnet ist.

4. Dampfgarer-Anordnung nach einem der Ansprüche 1 bis 3,
**dadurch gekennzeichnet, dass**
in dem Evakuierungskanal (9) zwischen dem Ansaugraum (3) und dem Kompressor (8) ein Rückschlagventil (10) angeordnet ist.

5. Dampfgarer-Anordnung nach einem der Ansprüche 1 bis 4,
**dadurch gekennzeichnet, dass**
die Steuereinrichtung (11) derart ausgebildet ist, dass der Ansaugvorgang dadurch beendet wird, dass die schaltbaren Ventile (6, 7) geschlossen werden.

6. Dampfgarer-Anordnung nach Anspruch 5,
**dadurch gekennzeichnet, dass**
die Steuereinrichtung (11) derart ausgebildet ist, dass der Ansaugvorgang dadurch beendet wird, dass ein vorbestimmtes Zeitintervall für einen durchgehenden Öffnungszustand der schaltbaren Ventile (6, 7) abgelaufen ist.

7. Dampfgarer-Anordnung nach einem der Ansprüche 5 oder 6,
**dadurch gekennzeichnet, dass**
in dem Ansaugraum (3) ein Drucksensor (22) angeordnet und die Steuereinrichtung (11) derart ausgebildet ist, dass der Ansaugvorgang dadurch beendet wird, dass an dem Drucksensor (22) ein Druckwert erreicht wird, der einem vorbestimmten Druckwert entspricht.

8. Dampfgarer-Anordnung nach einem der Ansprüche 1 bis 4,
**dadurch gekennzeichnet, dass**
die Ventile (6, 7) als schaltbare Magnetventile (6, 7) ausgebildet sind.

9. Dampfgarer-Anordnung nach einem der Ansprüche 1 bis 8,
**dadurch gekennzeichnet, dass**
die Steuereinrichtung (11) zusätzlich den Kompressor (8) steuert, wobei sie den Kompressor (8) nach Beendigung des Ansaugvorgangs einschaltet.

10. Fahrzeug mit einer Bordküche, in der eine Dampfgarer-Anordnung nach einem der Ansprüche 1 bis 9 angeordnet ist, wobei der Fortluftkanal (19) der Dampfgarer-Anordnung an eine vorhandene Fortluft-Kanalanordnung des Fahrzeugs angeschlossen ist.
